(19) Europäisches Patentamt
European Patent Office
Office européen des brevets

(11) EP 2 011 394 A1

# (12) EUROPÄISCHE PATENTANMELDUNG

(43) Veröffentlichungstag:
**07.01.2009 Patentblatt 2009/02**

(51) Int Cl.:
***A01N 43/38*** *(2006.01)* ***A01N 47/06*** *(2006.01)*
*A01N 51/00* *(2006.01)*

(21) Anmeldenummer: **07111610.7**

(22) Anmeldetag: **03.07.2007**

(84) Benannte Vertragsstaaten:
**AT BE BG CH CY CZ DE DK EE ES FI FR GB GR HU IE IS IT LI LT LU LV MC MT NL PL PT RO SE SI SK TR**
Benannte Erstreckungsstaaten:
**AL BA HR MK RS**

(71) Anmelder: **Bayer CropScience AG**
**40789 Monheim (DE)**

(72) Erfinder: **Die Erfindernennung liegt noch nicht vor**

## (54) Verwendung von Tetramsäure - Derivaten zur Bekämpfung von virusübertragenden Vektoren

(57) Die vorliegende Erfindung betrifft die Verwendung von Tetramsäure-Derivaten allein und auch von Wirkstoffkombinationen, die aus bekannten Tetramsäure-Derivaten einerseits und weiteren bekannten insektiziden Wirkstoffen andererseits bestehen, zur Bekämpfung von durch Insekten übertragenen Virosen.

EP 2 011 394 A1

**Beschreibung**

Die vorliegende Erfindung betrifft die Verwendung von Tetramsäure-Derivaten allein und auch von Wirkstoffkombinationen, die aus bekannten Tetramsäure-Derivaten einerseits und weiteren bekannten insektiziden Wirkstoffen andererseits bestehen, zur Bekämpfung von durch Vektoren (Insekten) übertragenen Virosen.

Es ist bereits bekannt, dass bestimmte cyclische Ketoenole herbizide, insektizide und akarizide Eigenschaften besitzen. Die Wirksamkeit dieser Stoffe ist gut, lässt aber bei niedrigen Aufwandmengen in manchen Fällen zu wünschen übrig.

Bekannt mit insektizider und/oder akarizider Wirkung sind 1H-3-Aryl-pyrrolidin-2,4-dion-Derivate (WO 98/05638) sowie deren cis-Isomeren (WO 04/007448).

Weiterhin bekannt sind Mischungen von Verbindungen aus der WO 98/05638 mit anderen Insektiziden und/oder Akariziden: WO 01/89300, WO 02/00025, WO 02/05648, WO 02/17715, WO 02/19824, WO 02/30199, WO 02/37963, WO 05/004603, WO 05/053405, WO 06/089665, DE-A-10342673, DE-A-06031973. Allerdings ist die Wirkung dieser Mischungen nicht immer befriedigend.

Es wurde nun gefunden, dass sowohl die Verbindungen der Formeln (I-1) oder (I-2)

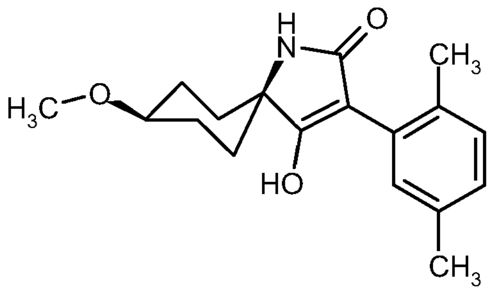

(I-1)

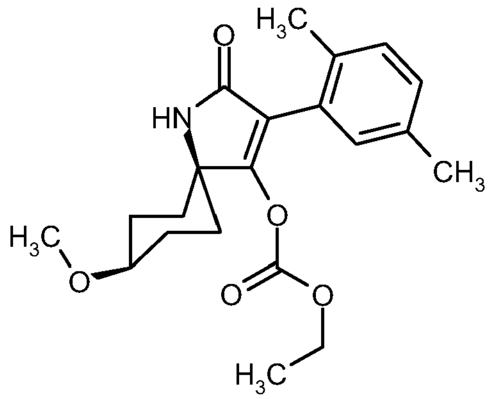

(I-2)

beide Verbindungen bekannt aus WO 04/007448

als auch Wirkstoffkombinationen enhaltend die Verbindungen (I-1) oder (I-2) und mindestens einen Agonisten bzw. Antagonisten von Acetylcholinrezeptoren, insbesondere eine Verbindung der folgenden Formeln

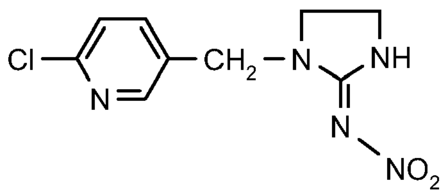

Imidacloprid (A1) bekannt aus EP-A-00192060
und/oder

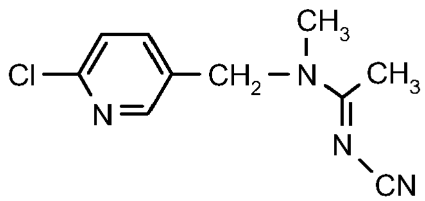

Acetamiprid (A2) bekannt aus WO 91/04965
und/oder

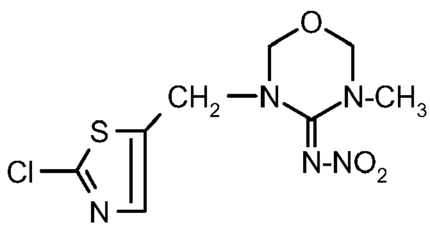

Thiamethoxam (A3) bekannt aus EP-A-00580553
und/oder

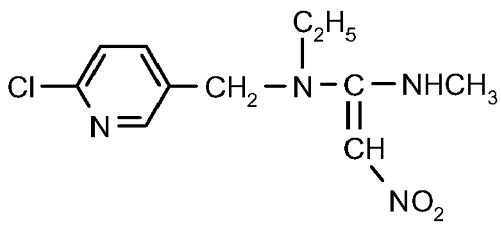

Nitenpyram (A4) bekannt aus EP-A-00302389
und/oder

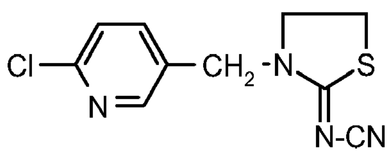

Thiacloprid (A5) bekannt aus EP-A-00235725
und/oder

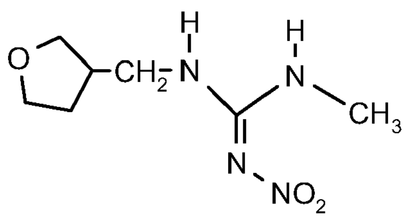

Dinotefuran (A6) bekannt aus EP-A-00649845
und/oder

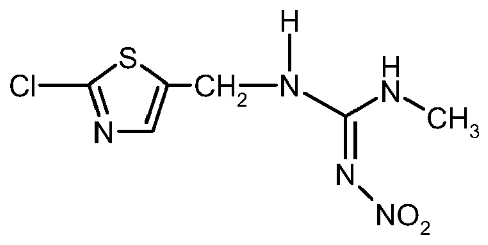

Clothianidin (A7) bekannt aus EP-A-00376279
und/oder

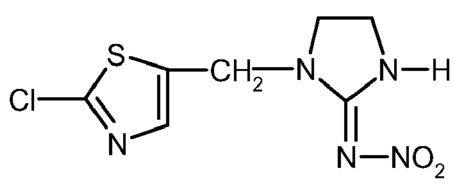

Imidaclothiz (A8) bekannt aus EP-A-00192060
besonders gut zur Verhinderung von Virusausbreitungen in Kulturen wie Soja, Baumwolle, Rüben, Mais, Reis, Kartoffeln, Tabak, Getreide, tropische Früchte, Gemüse und Zierpflanzen geeignet sind.

Wachstumsregulierende Insektizide wie die Verbindungen der Formeln (I-1) und (I-2) wirken in der Regel langsam und besitzen keine abtötende Wirkung auf adulte Tiere. Aufgrund des verzögerten Wirkungseintritts war eine Anwendung zur Viruskontrolle nicht zu erwarten. Völlig überraschend ist es, dass die Verbindungen der Formeln (I-1) und (I-2) trotz des verzögerten Wirkungseintritts zur Viruskontrolle geeinget sind, in dem sie die virusübertragenden Vektoren kontrollieren. Unter virusübertragende Vektoren versteht man solche Insekten, die pflanzenpathogene Viren übertragen wie z.B. Weiße Fliegen, Zikaden, Thripse, Spinnmilben und Blattläuse.

Weiterhin überraschend ist, dass die Wirkung der Wirkstoffkombinationen auf die Virusausbreitung wesentlich höher ist als die Summe der Wirkungen der einzelnen Wirkstoffe. Es liegt ein nicht vorhersehbarer echter synergistischer Effekt vor und nicht nur eine Wirkungsergänzung.

Bevorzugt sind Wirkstoffkombinationen enthaltend die Verbindung der Formel (I-1) und mindestens einen Wirkstoff aus der Gruppe der Agonisten bzw. Antogonisten von Acetylcholinrezeptoren.

Bevorzugt sind ebenfalls Wirkstoffkombinationen enthaltend die Verbindung der Formel (1-2) und mindestens einen Wirkstoff der aus der Gruppe der Agonisten bzw. Antagonisten von Acetylcholinrezeptoren.

Von hervorgehobenem Interesse sind folgende Kombinationen: (I-1) + (A1), (I-1) + (A2), (I-1) + (A3), (I-1) + (A4), (I-1) + (A5), (I-1) + (A6), (I-1) + (A7), (I-1) + (A8), (I-2) + (A1), (I-2) + (A2), (I-2) + (A3), (I-2) + (A4), (I-2) + (A5), (I-2) + (A6), (I-2) + (A7), (I-2) + (A8).

Die Wirkstoffkombinationen können darüber hinaus auch weitere fungizid, akarizid oder insektizid wirksame Zumischkomponenten enthalten.

Wenn die Wirkstoffe in den Wirkstoffkombinationen in bestimmten Gewichtsverhältnissen vorhanden sind, zeigt sich die verbesserte Wirkung besonders deutlich. Jedoch können die Gewichtsverhältnisse der Wirkstoffe in den Wirkstoffkombinationen in einem relativ großen Bereich variiert werden. Im allgemeinen enthalten die erfindungsgemäßen Kombinationen Wirkstoffe der Formel (I-1) oder (1-2) und den Mischpartner in den in der nachfolgenden Tabelle angegeben bevorzugten und besonders bevorzugten Mischungsverhältnissen:
* die Mischungsverhältnisse basieren auf Gewichtsverhältnissen. Das Verhältnis ist zu verstehen als Wirkstoff der Formel (I-1):Mischpartner bzw. Formel (I-2):Mischpartner

| Mischpartner | bevorzugtes Mischungsverhältnis | besonders bevorzugtes Mischungsverhältnis | ganz besonders bevorzugtes Mischungsverhältnis |
|---|---|---|---|
| Imidacloprid | 25:1 bis 1:25 | 5:1 bis 1:5 | 3 : 1 bis 1 : 3 |
| Acetamiprid | 25:1 bis 1:25 | 5:1 bis 1:5 | 3 : 1 bis 1 : 3 |
| Thiamethoxam | 25:1 bis 1:25 | 5:1 bis 1:5 | 3 : 1 bis 1 : 3 |
| Nitenpyram | 25:1 bis 1:25 | 5:1 bis 1:5 | 3 : 1 bis 1 : 3 |
| Thiacloprid | 25:1 bis 1:25 | 5:1 bis 1:5 | 3 : 1 bis 1 : 3 |
| Dinotefuran | 25:1 bis 1:25 | 5:1 bis 1:5 | 3 : 1 bis 1 : 3 |
| Clothianidin | 25:1 bis 1:25 | 5:1 bis 1:5 | 3 : 1 bis 1 : 3 |
| Imidaclothiz | 25:1 bis 1:25 | 5:1 bis 1:5 | 3 : 1 bis 1 : 3 |

Die Wirkstoffkombinationen aber auch die Verbindungen der Formeln (I-1) oder (1-2) alleine eignen sich bei guter Pflanzenverträglichkeit und günstiger Warmblütertoxizität zur Verhinderung von Virusausbreitungen in Soja, Mais, Reis, Rüben, Getreide (Weizen, Gerste, Roggen, Hafer, Triticale), Tabak, Baumwolle, Gemüse, tropische Früchte, Kartoffeln und Zierpflanzen.

Bevorzugt sind Pflanzenviren mit zirkulärer Einstrang-DNS sogenannte Gemini-Viren wie z.B. Bean-Golden-Mosaik-Virus (BGMV), Cassava-Latend-Virus (CLV), Tomato-Golden-Mosaik-Virus (TGMV), Maize-Streak-Virus (MSV), Tomato Spotted-Wilt-Virus (TSWV), Tobacco-Mosaik-Virus (TMV), Tomato-Mosaik-Virus (ToMV), Potato-Yellow-Mosaik-Virus (PYMV), Tomatoe-Yellow-Leaf-Curl-Virus (TYLCV), Barley-Yellow-Dwarf-Virus (BYDV), Beet-Mosaik-Virus (BtMV), Beet-Yellow-Virus (BYV), Beet-Western-Yellow-Virus (BWYV).

Die nur allgemein beschriebenen zu schützenden Kulturen sind im Folgenden differenziert und näher spezifiziert. So versteht man hinsichtlich der Anwendung unter Gemüse z.B. Fruchtgemüse und Blütenstände als Gemüse, beispielsweise Paprika, Peperoni, Tomaten, Auberginen, Gurken, Kürbisse, Zucchini, Ackerbohnen, Stangenbohnen, Buschbohnen, Erbsen, Artischocken, Mais;

aber auch Blattgemüse, beispielsweise Kopfsalat, Chicoreé, Endivien, Kressen, Rauken, Feldsalat, Eisbergsalat, Lauch, Spinat, Mangold;

weiterhin Knollen-, Wurzel- und Stengelgemüse, beispielsweise Sellerie, Rote Beete, Möhren, Radieschen, Meerrettich, Schwarzwurzeln, Spargel, Speiserüben, Palmsprossen, Bambussprossen, außerdem Zwiebelgemüse, beispielsweise Zwiebeln, Lauch, Fenchel, Knoblauch;

ferner Kohlgemüse, wie Blumenkohl, Broccoli, Kohlrabi, Rotkohl, Weißkohl, Grünkohl, Wirsing, Rosenkohl, Chinakohl.

So versteht man hinsichtlich der Anwendung in Getreidekulturen beispielsweise Weizen, Gerste, Roggen, Hafer, Triticale aber auch Mais, Hirse und Reis;

weiterhin Wein und tropische Kulturen, wie beispielsweise Mangos, Papayas, Feigen, Ananas, Datteln, Bananen, Durians (Stinkfrüchte), Kakis, Kokosnüsse, Kakao, Kaffee, Avocados, Litschies, Maracujas, Guaven,

außerdem Mandeln und Nüsse wie beispielsweise Haselnüsse, Walnüsse, Pistazien, Cashewnüsse, Paranüsse, Pekannüsse, Buttemüsse, Kastanien, Hickorynüsse, Macadamiannüsse, Erdnüsse,

darüber hinaus auch Beerenfrüchte wie beispielsweise Johannisbeeren, Stachelbeeren, Himbeeren, Brombeeren, Heidelbeeren, Erdbeeren, Preiselbeeren, Kiwis, Cranberries.

Hinsichtlich der Anwendung versteht man unter Zierpflanzen ein- und mehrjährige Pflanzen, z.B. Schnittblumen wie beispielsweise Rosen, Nelken, Gerbera, Lilien, Margeriten, Chrysanthemen, Tulpen, Narzissen, Anemonen, Mohn, Amyrillis, Dahlien, Azaleen, Malven,

aber auch z.B. Beetpflanzen, Topfpflanzen und Stauden, wie beispielsweise Rosen, Tagetes, Stiefmütterchen, Geranien, Fuchsien, Hibiscus, Chrysanthemen, Fleißige Lieschen, Alpenveilchen, Ursambaraveilchen, Sonnenblumen, Begonien,
ferner z.B. Sträucher und Koniferen wie beispielsweise Ficus, Rhododendron, Fichten, Tannen, Kiefern, Eiben, Wacholder, Pinien, Oleander.

Erfindungsgemäß können alle Pflanzen und Pflanzenteile behandelt werden. Unter Pflanzen werden hierbei alle Pflanzen und Pflanzenpopulationen verstanden, wie erwünschte und unerwünschte Wildpflanzen oder Kulturpflanzen (einschließlich natürlich vorkommender Kulturpflanzen). Kulturpflanzen können Pflanzen sein, die durch konventionelle Züchtungs- und Optimierungsmethoden oder durch biotechnologische und gentechnologische Methoden oder Kombinationen dieser Methoden erhalten werden können, einschließlich der transgenen Pflanzen und einschließlich der durch Sortenschutzrechte schützbaren oder nicht schützbaren Pflanzensorten. Unter Pflanzenteilen sollen alle oberirdischen und unterirdischen Teile und Organe der Pflanzen, wie Sproß, Blatt, Blüte und Wurzel verstanden werden, wobei beispielhaft Blätter, Nadeln, Stengel, Stämme, Blüten, Fruchtkörper, Früchte und Samen sowie Wurzeln, Knollen und Rhizome aufgeführt werden. Zu den Pflanzenteilen gehört auch Erntegut sowie vegetatives und generatives Vermehrungsmaterial, beispielsweise Stecklinge, Knollen, Rhizome, Ableger und Samen.

Die erfindungsgemäße Behandlung der Pflanzen und Pflanzenteile mit dem Wirkstoff erfolgt direkt oder durch Einwirkung auf deren Umgebung, Lebensraum oder Lagerraum nach den üblichen Behandlungsmethoden, z.B. durch Tauchen, Sprühen, Verdampfen, Vernebeln, Streuen, Aufstreichen, Injezieren und bei Vermehrungsmaterial, insbesondere bei Samen, weiterhin durch ein- oder mehrschichtiges Umhüllen.

Wie bereits oben erwähnt, können erfindungsgemäß alle Pflanzen und deren Teile behandelt werden. In einer bevorzugten Ausführungsform werden wild vorkommende oder durch konventionelle biologische Zuchtmethoden, wie Kreuzung oder Protoplastenfusion erhaltenen Pflanzenarten und Pflanzensorten sowie deren Teile behandelt. In einer weiteren bevorzugten Ausführungsform werden transgene Pflanzen und Pflanzensorten, die durch gentechnologische Methoden gegebenenfalls in Kombination mit konventionellen Methoden erhalten wird (Genetic Modified Organisms) und deren Teile behandelt. Der Begriff "Teile" bzw. "Teile von Pflanzen" oder "Pflanzenteile" wird oben erläutert.

Besonders bevorzugt werden erfindungsgemäß Pflanzen der jeweils handelsüblichen oder in Gebrauch befindlichen Pflanzensorten behandelt. Unter Pflanzensorten versteht man Pflanzen mit neuen Eigenschaften ("Traits"), die sowohl durch konventionelle Züchtung, durch Mutagenese oder durch rekombinante DNA-Techniken gezüchtet worden sind. Dies können Sorten, Bio- und Genotypen sein.

Je nach Pflanzenarten bzw. Pflanzensorten, deren Standort und Wachstumsbedingungen (Böden, Klima, Vegetationsperiode, Ernährung) können durch die erfindungsgemäße Behandlung auch überadditive ("synergistische") Effekte auftreten. So sind beispielsweise erniedrigte Aufwandmengen und/oder Erweiterungen des Wirkungsspektrums und/oder eine Verstärkung der Wirkung der erfindungsgemäß verwendbaren Stoffe und Mittel, besseres Pflanzenwachstum, erhöhte Toleranz gegenüber hohen oder niedrigen Temperaturen, erhöhte Toleranz gegen Trockenheit oder gegen Wasser- bzw. Bodensalzgehalt, erhöhte Blühleistung, erleichterte Ernte, Beschleunigung der Reife, höhere Ernteerträge, höhere Qualität und/oder höherer Ernährungswert der Ernteprodukte, höhere Lagerfähigkeit und/oder Bearbeitbarkeit der Ernteprodukte möglich, die über die eigentlich zu erwartenden Effekte hinausgehen.

Zu den bevorzugten erfindungsgemäß zu behandelnden transgenen (gentechnologisch erhaltenen) Pflanzen bzw. Pflanzensorten gehören alle Pflanzen, die durch die gentechnologische Modifikation genetisches Material erhielten, welches diesen Pflanzen besondere vorteilhafte wertvolle Eigenschaften ("Traits") verleiht. Beispiele für solche Eigenschaften sind besseres Pflanzenwachstum, erhöhte Toleranz gegenüber hohen oder niedrigen Temperaturen, erhöhte Toleranz gegen Trockenheit oder gegen Wasser- bzw. Bodensalzgehalt, erhöhte Blühleistung, erleichterte Ernte, Beschleunigung der Reife, höhere Ernteerträge, höhere Qualität und/oder höherer Ernährungswert der Ernteprodukte, höhere Lagerfähigkeit und/oder Bearbeitbarkeit der Ernteprodukte. Weitere und besonders hervorgehobene Beispiele für solche Eigenschaften sind eine erhöhte Abwehr der Pflanzen gegen tierische und mikrobielle Schädlinge, wie gegenüber Insekten, Milben, pflanzenpathogenen Pilzen, Bakterien und/oder Viren sowie eine erhöhte Toleranz der Pflanzen gegen bestimmte herbizide Wirkstoffe. Als Beispiele transgener Pflanzen werden die wichtigen Kulturpflanzen, wie Getreide (Weizen, Reis), Mais, Soja, Kartoffel, Baumwolle, Tabak, Raps sowie Obstpflanzen (mit den Früchten Äpfel, Birnen, Zitrusfrüchten und Weintrauben) erwähnt, wobei Mais, Soja, Kartoffel, Baumwolle, Tabak und Raps besonders hervorgehoben werden. Als Eigenschaften ("Traits") werden besonders hervorgehoben die erhöhte Abwehr der Pflanzen gegen Insekten, Spinnentiere, Nematoden und Schnecken durch in den Pflanzen entstehende Toxine, insbesondere solche, die durch das genetische Material aus Bacillus Thuringiensis (z.B. durch die Gene CryIA(a), CryIA(b), CryIA(c), CryIIA, CryIIIA, CryIIIB2, Cry9c Cry2Ab, Cry3Bb und CryIF sowie deren Kombinationen) in den Pflanzen erzeugt werden (im folgenden "Bt Pflanzen"). Als Eigenschaften ("Traits") werden auch besonders hervorgehoben die erhöhte Abwehr von Pflanzen gegen Pilze, Bakterien und Viren durch Systemische Akquirierte Resistenz (SAR), Systemin, Phytoalexine, Elicitoren sowie Resistenzgene und entsprechend exprimierte Proteine und Toxine. Als Eigenschaften ("Traits") werden weiterhin besonders hervorgehoben die erhöhte Toleranz der Pflanzen gegenüber bestimmten herbiziden Wirkstoffen, beispielsweise Imidazolinonen, Sulfonylharnstoffen, Glyphosate oder Phosphinotricin (z.B. "PAT"-Gen). Die jeweils die gewünschten Eigenschaften ("Traits") verleihenden Gene können auch in Kombinationen miteinander in den transgenen

Pflanzen vorkommen. Als Beispiele für "Bt Pflanzen" seien Maissorten, Baumwollsorten, Sojasorten und Kartoffelsorten genannt, die unter den Handelsbezeichnungen YIELD GARD® (z.B. Mais, Baumwolle, Soja), KnockOut® (z.B. Mais), StarLink® (z.B. Mais), Bollgard® (Baumwolle), Nucotn® (Baumwolle) und NewLeaf® (Kartoffel) vertrieben werden. Als Beispiele für Herbizid tolerante Pflanzen seien Maissorten, Baumwollsorten und Sojasorten genannt, die unter den Handelsbezeichnungen Roundup Ready® (Toleranz gegen Glyphosate z.B. Mais, Baumwolle, Soja), Liberty Link® (Toleranz gegen Phosphinotricin, z.B. Raps), IMI® (Toleranz gegen Imidazolinone) und STS® (Toleranz gegen Sulfonylharnstoffe z.B. Mais) vertrieben werden. Als Herbizid resistente (konventionell auf Herbizid-Toleranz gezüchtete) Pflanzen seien auch die unter der Bezeichnung Clearfield® vertriebenen Sorten (z.B. Mais) erwähnt. Selbstverständlich gelten diese Aussagen auch für in der Zukunft entwickelte bzw. zukünftig auf den Markt kommende Pflanzensorten mit diesen oder zukünftig entwickelten genetischen Eigenschaften ("Traits").

Die Wirkstoffkombinationen bzw. die Wirkstoffe (I-1) und (I-2) können in die üblichen Formulierungen überführt werden, wie Lösungen, Emulsionen, Spritzpulver, Suspensionen, Pulver, Stäubemittel, Pasten, lösliche Pulver, Granulate, Suspensions-Emulsions-Konzentrate, Wirkstoff-imprägnierte Natur- und synthetische Stoffe sowie Feinstverkapselungen in polymeren Stoffen.

Diese Formulierungen werden in bekannter Weise hergestellt, z.B. durch Vermischen des Wirkstoffs mit Streckmitteln, also flüssigen Lösungsmitteln und/oder festen Trägerstoffen, gegebenenfalls unter Verwendung von oberflächenaktiven Mitteln, also Emulgiermitteln und/oder Dispergiermitteln und/oder schaumerzeugenden Mitteln.

Als Streckmittel eignen sich z.B. Wasser, polare und unpolare organische chemische Flüssigkeiten z.B. aus den Klassen der aromatischen und nichtaromatischen Kohlenwasserstoffe (wie Paraffine, Alkylbenzole, Alkylnaphthaline, Chlorbenzole), der Alkohole und Polyole (die ggf. auch substituiert, verethert und/oder verestert sein können), der Ketone (wie Aceton, Cyclohexanon), Ester (auch Fette und Öle) und (poly-)Ether, der einfachen und substituierten Amine, Amide, Lactame (wie N-Alkylpyrrolidone) und Lactone, der Sulfone und Sulfoxide (wie Dimethylsulfoxid).

Im Falle der Benutzung von Wasser als Streckmittel können z.B. auch organische Lösungsmittel als Hilfslösungsmittel verwendet werden. Als flüssige Lösungsmittel kommen im wesentlichen in Frage: Aromaten, wie Xylol, Toluol, oder Alkylnaphthaline, chlorierte Aromaten und chlorierte aliphatische Kohlenwasserstoffe, wie Chlorbenzole, Chlorethylene oder Methylenchlorid, aliphatische Kohlenwasserstoffe, wie Cyclohexan oder Paraffine, z.B. Erdölfraktionen, mineralische und pflanzliche Öle, Alkohole, wie Butanol oder Glykol sowie deren Ether und Ester, Ketone wie Aceton, Methylethylketon, Methylisobutylketon oder Cyclohexanon, stark polare Lösungsmittel, wie Dimethylformamid und Dimethylsulfoxid, sowie Wasser.

Als feste Trägerstoffe kommen in Frage:

z.B. Ammoniumsalze und natürliche Gesteinsmehle, wie Kaoline, Tonerden, Talkum, Kreide, Quarz, Attapulgit, Montmorillonit oder Diatomeenerde und synthetische Gesteinsmehle, wie hochdisperse Kieselsäure, Aluminiumoxid und Silikate, als feste Trägerstoffe für Granulate kommen in Frage: z.B. gebrochene und fraktionierte natürliche Gesteine wie Calcit, Marmor, Bims, Sepiolith, Dolomit sowie synthetische Granulate aus anorganischen und organischen Mehlen sowie Granulate aus organischem Material wie Sägemehl, Kokosnussschalen, Maiskolben und Tabakstengeln; als Emulgier- und/oder schaumerzeugende Mittel kommen in Frage: z.B. nichtionogene und anionische Emulgatoren, wie Polyoxyethylen-Fettsäure-Ester, Polyoxyethylen-Fettalkohol-Ether, z.B. Alkylaryl-polyglykolether, Alkylsulfonate, Alkylsulfate, Arylsulfonate sowie Eiweißhydrolysate; als Dispergiermittel kommen in Frage: z.B. Lignin-Sulfitablaugen und Methylcellulose.

Es können in den Formulierungen Haftmittel wie Carboxymethylcellulose, natürliche und synthetische pulvrige, körnige oder latexförmige Polymere verwendet werden, wie Gummiarabicum, Polyvinylalkohol, Polyvinylacetat, sowie natürliche Phospholipide, wie Kephaline und Lecithine und synthetische Phospholipide. Weitere Additive können mineralische und vegetabile Öle sein.

Es können Farbstoffe wie anorganische Pigmente, z.B. Eisenoxid, Titanoxid, Ferrocyanblau und organische Farbstoffe, wie Alizarin-, Azo- und Metallphthalocyaninfarbstoffe und Spurennährstoffe wie Salze von Eisen, Mangan, Bor, Kupfer, Kobalt, Molybdän und Zink verwendet werden.

Die Formulierungen enthalten im allgemeinen zwischen 0,1 und 95 Gew.-% Wirkstoff, vorzugsweise zwischen 0,5 und 90 % und daneben bevorzugt Streckmittel und/oder oberflächenaktive Mittel.

Der Wirkstoffgehalt der aus den handelsüblichen Formulierungen bereiteten Anwendungsformen kann in weiten Bereichen variieren. Die Wirkstoffkonzentration der Anwendungsformen kann von 0,0000001 bis zu 95 Gew.-% Wirkstoff, vorzugsweise zwischen 0,0001 und 1 Gew.-% liegen.

Die Anwendung geschieht in einer den Anwendungsformen angepassten üblichen Weise.

**Anwendungsbeispiele**

Beispiel 1

7,5 $m^2$ große Parzellen mit Tomaten der Sorte "Jumbo" werden in drei Replikationen gegen den virusübertragenden Vektor Bemisia argentifolii behandelt. Die Applikation erfolgt mit einer motorgetriebenen Rückenspritze. Dabei werden die Wirkstoffe Beispiel (1-2) (240 SC) in einer Tankmischung mit 0.186 % a.i. Sojaöl Natur'L Oleo (OL 930) und der kommerzielle Standard Imidacloprid (200 SC) in den angegebenen Aufwandmengen ausgebracht. Es erfolgen vier Anwendungen im Abstand von jeweils 7 Tagen mit einer Wasseraufwandmenge von je 300 1, 300 1, 500 1 und 600 l/ha.

Die Auswertung erfolgt 25 Tage nach der 4. Behandlung, indem man den Virusbefall mit dem Tomatoe-Yellow-Leaf-Curl-Virus (TYLCV) an den Pflanzen bonitiert.

| Wirkstoff | Aufwandmenge g a.i./ha | Bekämpfungsgrad nach Abbott (%) |
|---|---|---|
| | | 25d |
| Imidacloprid | 72 | 40,0 |
| Beispiel (1-2) | 24 | 74,3 |

In der Kontrolle waren 11.7 von 15 Pflanzen mit dem TYLCV befallen.

Beispiel 2

7,5 $m^2$ große Parzellen mit Tomaten der Sorte "Jumbo" werden in 3 Replikationen gegen den virusübertragenden Vektor Bemisia argentifolii behandelt. Die Applikation erfolgt mit einer pressluftgetriebenen Rückenspritze. Dabei wird der Wirkstoff Beispiel (1-2) (240 SC) in einer Tankmischung mit 0,186 % a.i. Sojabohnenöl (Natur'L Oleo) (930 OL) und der kommerzielle Standard Imidacloprid (200 SC) in den angegebenen Aufwandmengen geprüft. Es erfolgen drei Anwendungen im Abstand von jeweils 7 Tagen. Die Wasseraufwandmengen betragen 300 l/ha, 400 l/ha und 600 l/ha.

Die Auswertung erfolgt 14 Tage nach der dritten Behandlung, indem man den Virusbefall mit dem Tomatoe-Yellow-Leaf-Curl-Virus (TYLCV) an den Pflanzen bonitiert.

| Wirkstoff | Aufwandmenge g a.i./ha | Bekämpfungsgrad nach Abbott (%) |
|---|---|---|
| | | 14d |
| Imidacloprid | 72 | 33 |
| Beispiel (I-2) | 48 | 83 |

Alle 18 Pflanzen in der Kontrolle waren mit dem TYLCV befallen.

Beispiel 3

12 $m^2$ große Parzellen mit Buschbohnen der Sorte "Carioca" werden in drei Replikationen gegen den virusübertragenden Vektor Bemisia argentifolii behandelt. Die Applikation erfolgt mit einer pressluftgetriebenen Rückenspritze. Dabei wird der Wirkstoff Beispiel (I-2) (240 SC) in einer Tankmischung mit 0,186 % a.i. Sojabohnenöl (Natur'L Oleo) (930 OL) und der kommerzielle Standard Imidacloprid (200 SC) in den angegebenen Aufwandmengen geprüft.

Es erfolgen drei Anwendungen im Abstand von jeweils 7 Tagen. Die Wasseraufwandmenge beträgt jeweils 300 1/ha.

Die Auswertung erfolgt 16 Tage nach der ersten Behandlung, indem man den Virusbefall mit dem Bean-Golden-Mosaik-Virus (BGMV) an den Pflanzen bonitiert.

| Wirkstoff | Aufwandmenge g a.i./ha | Bekämpfungsgrad nach Abbott (%) |
|---|---|---|
| | | 16 d |
| Imidacloprid | 72 | 60,0 |
| Beispiel (1-2) | 48 | 70,0 |

Alle 10 Pflanzen in der Kontrolle waren mit dem BGMV befallen.

Die aufgeführten Pflanzen können auch besonders vorteilhaft erfindungsgemäß mit der Wirkstoffmischung behandelt werden. Die bei den Mischungen oben angegebenen Vorzugsbereiche gelten auch für die Behandlung dieser Pflanzen. Besonders hervorgehoben sei die Pflanzenbehandlung mit den im vorliegenden Text speziell aufgeführten Mischungen.

Die gute Wirkung zur Bekämpfung von virusübertragenden Vektoren der Wirkstoffkombinationen geht aus den nachfolgenden Beispielen hervor. Während die einzelnen Wirkstoffe in der Wirkung Schwächen aufweisen, zeigen die Kombinationen eine Wirkung, die über eine einfache Wirkungssummierung hinausgeht.

Ein synergistischer Effekt liegt bei verschiedenen Wirkstoffen immer dann vor, wenn die Wirkung der Wirkstoffkombinationen größer ist als die Summe der Wirkungen der einzeln applizierten Wirkstoffe.

Die zu erwartende Wirkung für eine gegebene Kombination zweier Wirkstoffe kann nach S.R. Colby, Weeds 15 (1967), 20-22) wie folgt berechnet werden:

Wenn

X den Bekämpfungsgrad, ausgedrückt in % der unbehandelten Kontrolle, beim Einsatz des Wirkstoffes A in einer Aufwandmenge von m g/ha oder in einer Konzentration von m ppm bedeutet,

Y den Bekämpfungsgrad, ausgedrückt in % der unbehandelten Kontrolle, beim Einsatz des Wirkstoffes B in einer Aufwandmenge von n g/ha oder in einer Konzentration von n ppm bedeutet und

E den Bekämpfungsgrad, ausgedrückt in % der unbehandelten Kontrolle, beim Einsatz der Wirkstoffe A und B in Aufwandmengen von m und n g/ha oder in einer Konzentration von m und n ppm bedeutet,

dann ist

$$E = X + Y - \frac{X \cdot Y}{100}$$

Ist der tatsächliche Bekämpfungsgrad größer als berechnet, so ist die Kombination in ihrer Bekämpfung überadditiv, d.h. es liegt ein synergistischer Effekt vor. In diesem Fall muß der tatsächlich beobachtete Bekämpfungsgrad größer sein als der aus der oben angeführten Formel errechnete Wert für den erwarteten Abtötungsgrad (E).

Nach der gewünschten Zeit wird die Bekämpfung in % bestimmt. Dabei bedeutet 100 %, dass keine Pflanzen mit Viren befallen wurden; 0 % bedeutet, dass alle Pflanzen mit Viren befallen wurden.

**Beispiel 4**

7,5 $m^2$ große Parzellen mit Tomaten der Sorte "Jumbo" werden in drei Replikationen gegen den virusübertragenden Vektor Bemisia argentifolii mit einem druckluftbetriebenen Spritzgerät behandelt. Dabei wird eine Tankmischung des Wirkstoffs (I-2) (SC 240) und Imidacloprid (SC 200) im Vergleich zu dem Wirkstoff (I-2) (SC 240) solo in den angegebenen Aufwandmengen mit 0,186 % a.i. Sojabohnenöl (Natur'L Oleo) (OL 930) als Tankmischung und Imidacloprid (SC 200) solo appliziert. Es erfolgen vier Anwendungen im Abstand von jeweils 7 Tagen mit einer Wasseraufwandmenge von je 300 l/ha, 300 l/ha, 500 l/ha und 600 l/ha. Die Auswertung erfolgt 25 Tage nach der Behandlung, indem man den Virusbefall mit dem Tomato-Spotted-Wilt-Virus (TSWV) an den Pflanzen bonitiert.

| Wirkstoffe | Aufwandmenge g a.i./ha | Bekämpfungsgrad nach Abbott (%) 25 d |
|---|---|---|
| Imidacloprid | 72 | 80 |
| Wirkstoff (1-2) | 24 | 10 |
| Imidacloprid<br>+<br>Wirkstoff (1-2) | 72<br>+<br>24 | 90 |
| Nach Colby berechnet: | | 82 |

In der Kontrolle waren 3.3 von 15 Pflanzen mit dem TSWV befallen.

## Patentansprüche

**1.** Verwendung von Verbindungen der Formeln (I-1) oder (I-2)

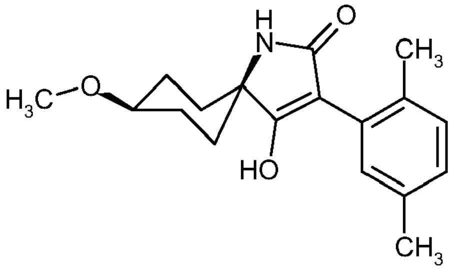

(I-1)

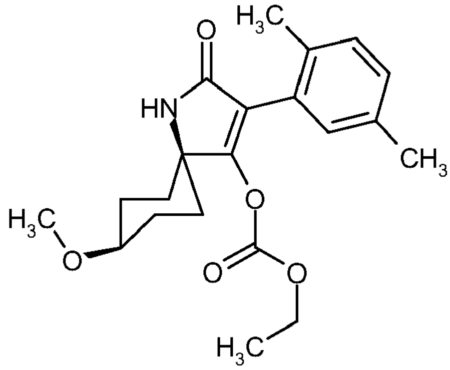

(I-2)

zur Bekämpfung von durch Insekten übertragenen Virosen.

**2.** Verwendung von Wirkstoffkombinationen enthaltend die Verbindungen der Formeln (I-1) oder (I-2) und mindestens einen Agonisten bzw. Antagonisten von Acetylcholinrezeptoren zur Bekämpfung von durch Insekten übertragenen Virosen.

Europäisches Patentamt

# EUROPÄISCHER RECHERCHENBERICHT

Nummer der Anmeldung
EP 07 11 1610

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| D,X | WO 2004/007448 A (BAYER CROPSCIENCE AG [DE]; HIMMLER THOMAS [DE]; FISCHER REINER [DE]; G) 22. Januar 2004 (2004-01-22)<br>* Verbindungen I-A-1,I-C-1 *<br>----- | 1,2 | INV.<br>A01N43/38<br>A01N47/06<br><br>ADD.<br>A01N51/00 |
| D,X | US 2003/212086 A1 (FISCHER REINER [DE] ET AL) 13. November 2003 (2003-11-13)<br>* Ansprüche 5,9 *<br>----- | 1,2 | |
| A | DD 100 135 A1 (ZSCHIEGNER,H-J ET AL.) 12. September 1973 (1973-09-12)<br>* das ganze Dokument *<br>----- | | |

RECHERCHIERTE SACHGEBIETE (IPC)
A01N

Der vorliegende Recherchenbericht wurde für alle Patentansprüche erstellt

| Recherchenort | Abschlußdatum der Recherche | Prüfer |
|---|---|---|
| München | 4. September 2007 | Bertrand, Franck |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
.......................................................................................................
& : Mitglied der gleichen Patentfamilie, übereinstimmendes Dokument

2
EPO FORM 1503 03.82 (P04C03)

## ANHANG ZUM EUROPÄISCHEN RECHERCHENBERICHT ÜBER DIE EUROPÄISCHE PATENTANMELDUNG NR.

EP 07 11 1610

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

04-09-2007

| Im Recherchenbericht angeführtes Patentdokument | Datum der Veröffentlichung | Mitglied(er) der Patentfamilie | Datum der Veröffentlichung |
|---|---|---|---|
| WO 2004007448 A | 22-01-2004 | AU 2003281028 A1 | 02-02-2004 |
| | | BR 0312695 A | 26-04-2005 |
| | | CA 2492096 A1 | 22-01-2004 |
| | | CN 1692099 A | 02-11-2005 |
| | | DE 10231333 A1 | 22-01-2004 |
| | | EG 23484 A | 03-12-2005 |
| | | EP 1523472 A1 | 20-04-2005 |
| | | JP 2005538073 T | 15-12-2005 |
| | | MX PA05000364 A | 31-03-2005 |
| | | US 2007032539 A1 | 08-02-2007 |
| | | ZA 200500230 A | 29-03-2006 |
| US 2003212086 A1 | 13-11-2003 | AR 028926 A1 | 28-05-2003 |
| | | AT 301932 T | 15-09-2005 |
| | | AU 6593101 A | 03-12-2001 |
| | | BR 0110979 A | 08-04-2003 |
| | | CA 2409206 A1 | 29-11-2001 |
| | | CN 1443039 A | 17-09-2003 |
| | | DE 10024934 A1 | 22-11-2001 |
| | | EG 22824 A | 30-09-2003 |
| | | WO 0189300 A1 | 29-11-2001 |
| | | EP 1307100 A1 | 07-05-2003 |
| | | ES 2244631 T3 | 16-12-2005 |
| | | JP 2003533544 T | 11-11-2003 |
| | | MX PA02011368 A | 06-09-2004 |
| | | NZ 522615 A | 26-11-2004 |
| | | OA 12265 A | 11-05-2006 |
| | | PL 358792 A1 | 23-08-2004 |
| | | RU 2287931 C2 | 27-11-2006 |
| | | TW 228121 B | 21-02-2005 |
| | | UA 72331 C2 | 15-02-2005 |
| | | ZA 200208564 A | 23-10-2003 |
| DD 100135 A1 | 12-09-1973 | KEINE | |

EPO FORM P0461

Für nähere Einzelheiten zu diesem Anhang : siehe Amtsblatt des Europäischen Patentamts, Nr.12/82

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- WO 9805638 A
- WO 04007448 A
- WO 0189300 A
- WO 0200025 A
- WO 0205648 A
- WO 0217715 A
- WO 0219824 A
- WO 0230199 A
- WO 0237963 A
- WO 05004603 A
- WO 05053405 A
- WO 06089665 A
- DE 10342673 A
- DE 06031973 A
- EP 00192060 A
- WO 9104965 A
- EP 00580553 A
- EP 00302389 A
- EP 00235725 A
- EP 00649845 A
- EP 00376279 A


### In der Beschreibung aufgeführte Nicht-Patentliteratur


- **S.R. COLBY.** *Weeds,* 1967, vol. 15, 20-22